# EUROPEAN PATENT SPECIFICATION

(11) **EP 4 012 194 B1**
(45) Date of publication and mention of the grant of the patent: **18.10.2023**
(21) Application number: 21207353.0
(22) Date of filing: 10.11.2021
(51) Int. Cl.: F04F 99/00

(54) **FLAME-BASED VACUUM GENERATOR**
FLAMMENBASIERTER VAKUUMERZEUGER
GÉNÉRATEUR DE VIDE À BASE DE FLAMME

(30) Priority: 08.12.2020 CN 202011445446
(43) Date of publication of application: 15.06.2022
(73) Proprietor: Zhejiang University, Hangzhou, Zhejiang 310027 (CN)
(72) Inventor: LI, Xin, Hangzhou, 310027 (CN); SHEN, Xufeng, Hangzhou, 310027 (CN); HAN, Ting, Hangzhou, 310027 (CN); HE, Yingjie, Hangzhou, 310027 (CN)
(74) Representative: Sun, Yiming

(56) References cited:
- CN-A- 102 028 978
- CN-Y- 2 188 959
- HAN TING ET AL: "Development of Vacuum Suction Unit Using Flame Extinguishment", 2018 IEEE/ASME INTERNATIONAL CONFERENCE ON ADVANCED INTELLIGENT MECHATRONICS (AIM), IEEE, 9 July 2018 (2018-07-09), pages 432-437, XP033396596, DOI: 10.1109/AIM.2018.8452706 [retrieved on 2018-08-30]
- Freaky Guys: "Fire in Vacuum Chamber | Freaky Guys", , 30 September 2018 (2018-09-30), XP055911250, Retrieved from the Internet: URL:https://www.youtube.com/watch?v=TzLrFq o89V0 [retrieved on 2022-04-11]

## Description

### TECHNICAL FIELD

The present invention relates to the vacuum technical field, and relates to a flame-based vacuum generator. Specifically, the present invention relates to a flame-based vacuum generator of a generic type as specified in the preamble of claim 1 attached.

### BACKGROUND

The Article "Development of Vacuum Suction Unit Using Flame Extinguishment" by Ting Han and Xin Li, Proceedings of the 2018 IEEE/ASME Conference on Advanced Intelligent Mechatronics pages 432 to 437 discloses a flame-based vacuum generator of a generic type as specified above.

Vacuum is widely used in all walks of life. Usually, the machines that produce vacuum include a vacuum pump and a jet vacuum tube. The vacuum pump drives a motor by consuming electricity, the motor drives blades or screws and other structures to produce vacuum. The jet vacuum tube generates vacuum by using the entrainment effect of a high-pressure fluid at a high speed. Such the vacuum generating machines have the following disadvantages:
(1) Huge power consumption: In the process of generating vacuum, energy is converted and transmitted many times. By using a vacuum pump as an example, first, power plants burn coal to generate electricity, and petrochemical energy is converted into electric energy. Electricity is transmitted through the power grid. The electricity is transmitted to the vacuum pump, and the electrical energy is converted into mechanical kinetic energy. The mechanical kinetic energy drives blades or screws and other structures to move, to generate vacuum, and the mechanical kinetic energy is converted into fluid potential energy (vacuum pressure is a form of fluid potential energy). Three times of energy form conversion and long-distance energy transmission occur in the whole process, and therefore a huge energy loss is caused. Further by using the jet vacuum tube as an example, the jet vacuum tube needs to be driven by high-pressure air, and therefore the jet vacuum tube needs one more energy conversion than the vacuum pump (the mechanical kinetic energy of the fluid compressor is converted into fluid kinetic energy of a high-speed fluid, and the fluid kinetic energy is converted into fluid potential energy).
(2) Limited use occasions: Both the vacuum pump and the jet vacuum tube require high power supply, so they can only be used under the condition of power supply.
(3) Loud noise: The motion of the motor and structure of the vacuum pump continuously produces huge noise. Rotation of the motor and the structure may drive the whole vacuum pump to vibrate, which produces noise. Therefore, a vibrating vacuum pump is a vibrating noise source, which continuously emits huge noise outward. A high-speed jet flow of the jet vacuum tube may produce a large number of airflow vortexes, which may produce huge aerodynamic noise, and the noise may be transmitted to the outside with the exhaust flow of jet vacuum tube, resulting in huge noise.

According to life experience and common sense, we know that burning with a flame can also form vacuum, such as cupping. However, for the cupping, a flame is used to preheat a cavity of a cupping pot, and is then taken out, and then the cavity is putted upside down on a human body. As the temperature in the cavity of the cupping pot gradually decreases, the air inside shrinks and forms a vacuum. However, such the vacuum generation method has two disadvantages: (1) Because the air cooling speed is relatively slow (several seconds or even several minutes), the vacuum formation process takes a long time; (2) It is impossible to produce high vacuum when the temperature decreases, so the adsorption force of the vacuum is insufficient and there is no engineering application value.

The Article "Development of Vacuum Suction Unit Using Flame Extinguishment" by Ting Han and Xin Li, Proceedings of the 2018 IEEE/ASME Conference on Advanced Intelligent Mechatronics pages 432 to 437 analyzes the causes of negative pressure in a cavity by detecting variation sin the pressure and temperature during flame extinguishment and discloses a vacuum suction unit.

CN 2188959 Y discloses an electrically heated cupping jar for physiotherapy composed of a jar body, an igniter, and a discharge valve. A drug storage slot and a metal protection cover are attached in the jar body. An ignition electrode and a combustion gas head pass through a jar wall and extend in the jar. The discharge valve is communicated with the inside and the outside of the jar wall.

CN 102028978 A discloses a self-ignition cupping therapeutic equipment consisting of a cup body and a casing fixed above the cup body and matched with the cup body, wherein at least one pressure reducing valve, a gas inlet nozzle and a high-pressure electronic ignition needle hermetically penetrate the top wall of the cup body, and the high-pressure electronic ignition needle is arranged at one side of the gas inlet nozzle; the end part of the ignition needle corresponds to a gas outlet of the gas inlet nozzle; and a self-ignition device is arranged in the casing.

A video accessible via Internet at https://www.youtube.com/watch?v=TzLrFqo89V0 and published by September 30, 2018, shows a device in which vacuum is generated through a combustible object placed inside a cavity with an opening. The combustible object is ignited and after the cavity is closed it extinguishes.

### SUMMARY

With regard to the defects in the prior art, the present invention provides a flame-based vacuum generator, which generates vacuum by generating a flame and extinguishing the flame in a cavity, and improves the structure by studying the internal mechanism of vacuum formation, thus further effectively improving the vacuum pressure and being beneficial to engineering application.

The technical solution adopted in the present invention is defined in claim 1 attached. Preferred embodiments are defined in claims attached and dependent upon claim 1 attached.

By deeply studying the internal mechanism of vacuum generated by flame combustion, it has been found in the present invention that the core factor is that a flame is a gaseous substance, and the extinguishing process of the flame is that the gaseous substance condenses into a liquid or solid, thus generating vacuum. A larger flame indicates a higher vacuum pressure that is generated after the flame is extinguished. In addition, it is found that generation of a flame in a closed cavity may form a high pressure in the cavity, which may greatly affect the vacuum formed after the flame is extinguished. Based on this, the present invention provides a flame-based vacuum generator, and carries out various improvements and optimizations on the basis of the vacuum generator. Compared with the existing vacuum generating device (a vacuum pump, a jet vacuum tube, or the like), the vacuum generator of the present invention has the following advantages.
(1) Extremely low energy consumption: The present invention directly uses fuel as a power source. Combustion of fuel directly produces fluid potential energy (that is, vacuum pressure). There is only one energy conversion in the whole process, which minimizes the energy loss.
(2) Wide range of use: The present invention does not need high-power electrical equipment, so it does not need high-power electrical supply. The flame-based vacuum generator can operate under the condition of extremely low power supply (the power of ignition spark generated by the igniter is extremely low, and the ignition can be realized by using a very small button cell).
(3) Low noise: When igniting, the electric spark of the igniter may make an extremely weak sound. In an unsealed cavity, the generation of the flame produces almost no sound. In a closed cavity, the generation of the flame may produce an instant sound, but because the cavity is in a closed state, the sound cannot be effectively transmitted to the outside, and therefore the sound is not obvious. Further, extinguishment of the flame hardly makes a sound. In summary, the present invention does not generate continuous mechanical vibration and high-speed airflow, and therefore does not generate significant noise.

### BRIEF DESCRIPTION OF THE ACCOMPANYING DRAWINGS

FIG. 1 is a schematic diagram of a most basic structure and process of a prior art flame-based vacuum generator;
FIG. 2 is a change curve of pressure and temperature in a cavity during a whole process of combustion and extinguishment of a flame;
FIG. 3 shows an experiment (a) and a result diagram (b) of a relationship between an amount of a flame and a vacuum pressure in the cavity;
FIG. 4 is schematic structural diagram of another prior art flame-based vacuum generator;
FIG. 5 is a schematic diagram of the structure shown in FIG. 4;
FIG. 6 is a change curve of pressure in the cavity during the experiment process in FIG. 5;
FIG. 7 is schematic structural diagram of a specific implementation of the present invention;
FIG. 8 is a change curve of pressure in a cavity during the experiment process of the structure in FIG. 7;
FIG. 9 is schematic structural diagram of another specific implementation of the present invention;
FIG. 10 is schematic structural diagram of another specific implementation of the present invention; and
FIG. 11 is schematic structural diagram of another specific implementation of the present invention.

### DETAILED DESCRIPTION OF THE EMBODIMENTS

The solutions of the present invention is further explained and described with reference to prior art embodiments, the embodiments of the invention and the accompanying drawings.

### Embodiment 1

In this example, the vacuum generator is formed by a shell, a combustible object, and an igniter. The combustible object is an alcohol-containing block. A cavity is formed in the shell, and the alcohol-containing block is disposed in the cavity. The cavity is provided with an opening. To test the pressure and temperature changes in the cavity, a temperature sensor and a pressure sensor are disposed on a surface of a workpiece.

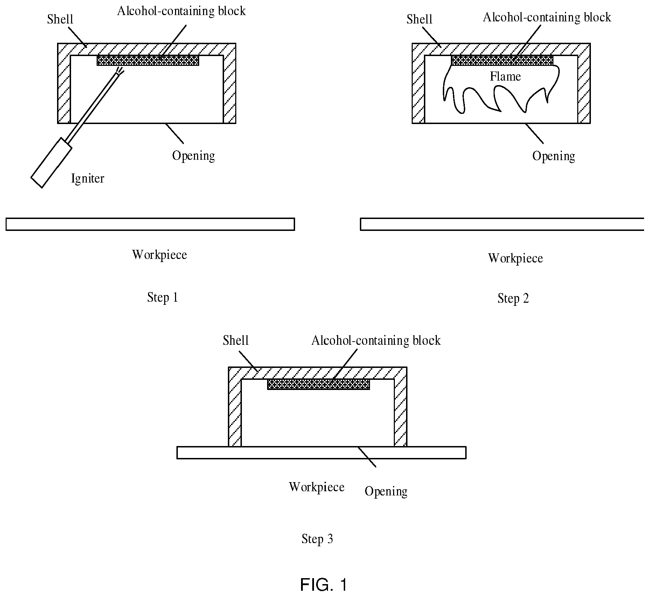

As shown in FIG. 1, first, the igniter ignites a solid alcohol-containing block, and the solid alcohol-containing block burns in the cavity to form a flame. Then, an end face at the opening of the shell is placed on the workpiece, and the workpiece covers the opening of the cavity and separates the cavity from the surrounding atmosphere, so that the cavity forms a closed space. The flame consumes oxygen in the cavity, and with the gradual decrease in the oxygen concentration, the flame is extinguished, and a vacuum pressure is formed in the cavity. The opening of the shell connects the vacuum pressure to the surface of the workpiece and plays a role in sucking the workpiece.

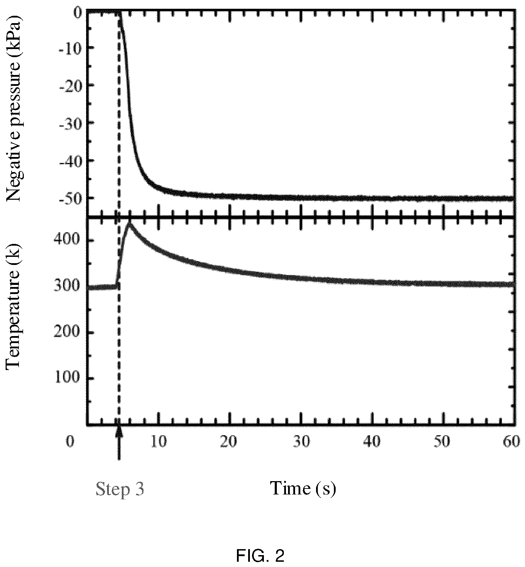

FIG. 2 is a curve of pressure and temperature in the cavity after the open end surface of the opening of the shell is placed on the workpiece. It can be seen that before step 3 in FIG. 1, the cavity is communicated with the surrounding atmosphere, and the pressure in the cavity is equal to the atmospheric pressure. After step 3, the pressure in the cavity decreases with the extinguishment of the flame, and finally a vacuum pressure of 50 kPa is formed. The reasons for the above vacuum pressure in the cavity are analyzed as follows:
1) The combustion of the solid alcohol-containing block consumes oxygen

Oxygen accounts for 20% of the air. In the process of alcohol combustion, assuming that the combustion is completely sufficient, the chemical reaction of alcohol combustion consumes three oxygen molecules and produces two carbon dioxide molecules at the same time. According to this calculation, after the flame is extinguished, the gas in the cavity is reduced by about 7% (= 20%/3), and the vacuum pressure obtained through calculation is only 7 kPa. The vacuum pressure is far less than the vacuum pressure measured by experiments. Apparently, the reason is not the main reason for the vacuum in the above-mentioned cavity.

2) After the flame is extinguished, the temperature decreases and the gas cools and shrinks

When the solid alcohol-containing block burns, a large amount of heat is released, which increases the temperature in the cavity. After the flame is extinguished, the combustion stops, the alcohol-containing block no longer releases heat, the heat in the cavity is dissipated through heat exchange with the shell wall, and the temperature in the cavity decreases, so the gas in the cavity cools and shrinks to form a vacuum pressure. However, the data in FIG. 2 shows that the temperature has been rising until the flame is completely extinguished. And, even though the temperature is still rising, the vacuum pressure has been formed in a short time. When the temperature rises to the peak, there is already a vacuum pressure of 30 kPa. Apparently, the vacuum pressure of 30 kPa cannot be explained by temperature drop. Moreover, the temperature drop is a very slow process, and therefore the temperature drop cannot well explain the rapid generation of vacuum pressure either.

3) Condensation of flame

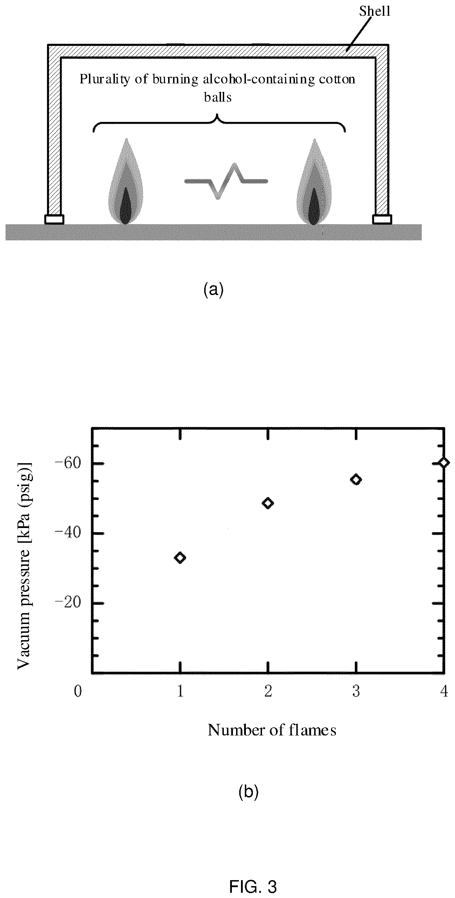

Aflame is a gas-like substance. The extinguishment of a flame is essentially a process in which this gas-like substance condenses into a liquid or solid. That is, when the flame is extinguished, the gas-like flame disappears, thus generating vacuum. A larger flame volume indicates a higher vacuum pressure that is generated after the flame is extinguished. FIG. 3(a) is a schematic diagram of the corresponding experiment. A plurality of alcohol-containing cotton balls are placed on a plane. The plurality of alcohol-containing cotton balls are ignited to generate a plurality of flame clusters. Then, the flame clusters are covered by a shell, and meanwhile the pressure inside the shell is measured by using a pressure sensor, to obtain the experimental results in FIG. 3(b).

The experimental results show that a larger number of flame clusters indicates a greater vacuum pressure in the shell, that is, a larger flame volume indicates a greater vacuum pressure. Moreover, in the process, the generation of the vacuum pressure is synchronized with the extinguishment of the flame, so the generation speed of vacuum pressure is very quick.

Generally, people only know the above-mentioned 1) and 2), which leads to a misunderstanding that: after the flame is extinguished, the formation of vacuum is very slow (the temperature drop process takes a long time), and the vacuum pressure is very small. The misunderstanding limits the development and utilization of the phenomenon. In addition, it also leads to another misunderstanding that: the magnitude of vacuum is not correlated with the size of flame. Therefore, in the current cupping technology, a flame is not put inside the cavity, and no design requirements for the size of the flame are put forward. It has been found through research that the third reason is the core reason of generating vacuum pressure, and when being applied to a vacuum generator, so long as sufficient combustion is ensured and a flame large enough is obtained, high vacuum pressure can be quickly generated. Such the vacuum generator can have the value of industrial applicability.

### Embodiment 2

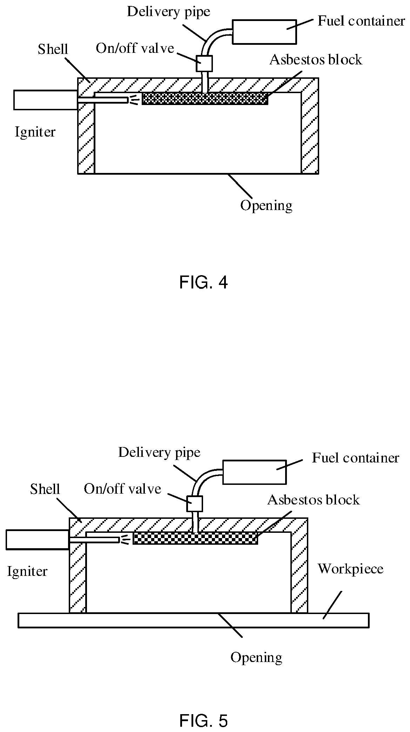

FIG. 4 shows another specific implementation. Compared with Embodiment 1, the vacuum generator of this embodiment maintains sufficient combustion and obtains a large flame by replenishing fuel. There are many ways to replenish fuel, but this embodiment will only be explained in one specific way. In this embodiment, the combustible object is an alcohol-impregnated asbestos block disposed in a cavity of a shell. The vacuum generator further includes a fuel replenishment unit, which includes a fuel container disposed outside the shell. The fuel container and the asbestos block are connected through a delivery pipe. An on/off valve is mounted on the delivery pipe. The igniter is disposed outside the shell, and an ignition head of the igniter extends into the shell and is close to the asbestos block.

When the on/off valve is opened, the liquid fuel (such as alcohol, kerosene, or gasoline) stored in the fuel container flows to the asbestos block through the delivery pipe and soaks the asbestos block, and then the on/off valve is closed to cut off the liquid fuel supply. Then, the igniter ignites the liquid fuel on the asbestos block, to generate a flame. The end surface at the opening of the shell is placed on a workpiece. The workpiece covers the opening of the cavity and separates the cavity from the surrounding atmosphere. The flame is extinguished, and a vacuum pressure is formed inside the cavity. The opening of the shell connects the vacuum pressure to the surface of the workpiece and plays a role in sucking the workpiece. After repeated combustion, the liquid fuel on the asbestos block becomes less, which may lead to the flame becoming smaller. The on/off valve may be opened again to replenish fuel to the asbestos block to ensure that there is enough fuel on the asbestos block, so that it can burn to form a large flame, thereby obtaining a higher vacuum pressure after the flame is extinguished.

### Embodiment 3

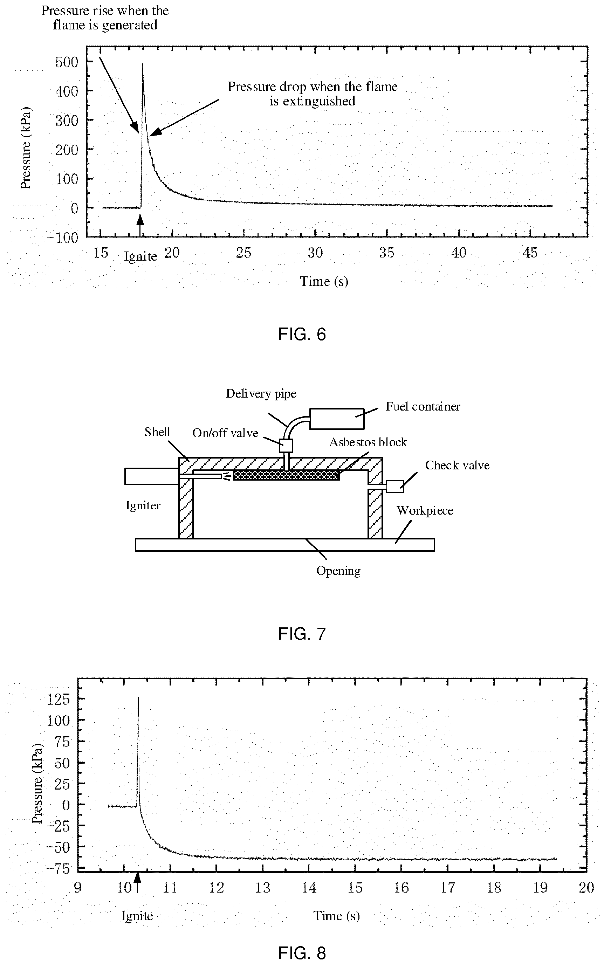

In this embodiment, the vacuum generator of FIG. 4 is placed on the workpiece in advance, and the shell and the workpiece form a closed cavity, as shown in FIG. 5. Then, the fuel on the asbestos block is ignited. The fuel burns with the air in the cavity to generate a flame. Subsequently, the air in the cavity ran out and the flame is extinguished. FIG. 6 is a change curve of pressure in the cavity obtained through experiments. When the fuel burns in the closed cavity, generation of the flame may cause the pressure in the cavity to rise rapidly. Such the pressure rise may raise the pressure drop curve when the flame is extinguished, which may lead to the decrease of vacuum pressure in the cavity, and even fail to form a vacuum pressure. Therefore, in industrial applications, inhibition of the pressure rise of the combustible object in closed cavity is helpful to enhance the vacuum pressure. In this embodiment, a high pressure inhibition device is disposed to inhibit and reduce the pressure rise when the flame is generated, thereby achieving the objective of improving the vacuum pressure. The high pressure inhibition device communicates the cavity with the outside atmosphere only when the pressure in the cavity is greater than a pressure outside the shell.

The high pressure inhibition device in this embodiment is a check valve, and the check valve is communicated with the cavity through a pipe, as shown in FIG. 7. When the fuel burns, the pressure in the cavity rises, and the check valve opens under the action of pressure difference between the two sides (the atmospheric pressure is lower than the pressure in the cavity). The high-pressure gas in the cavity is discharged through the check valve, thereby playing a role in reducing the high pressure in the cavity. When the vacuum pressure begins to form in the cavity, the check valve is closed under the action of pressure difference on both sides (the atmospheric pressure is higher than the pressure in the cavity), thereby playing a role in maintaining the vacuum pressure in the cavity. FIG. 8 shows experimental results of the device of FIG. 7. By comparing the results in FIG. 6 and FIG. 8, it can be seen that the high pressure inhibition device can effectively inhibit and reduce the pressure rise in the cavity and increase the vacuum pressure after the flame is extinguished.

### Embodiment 4

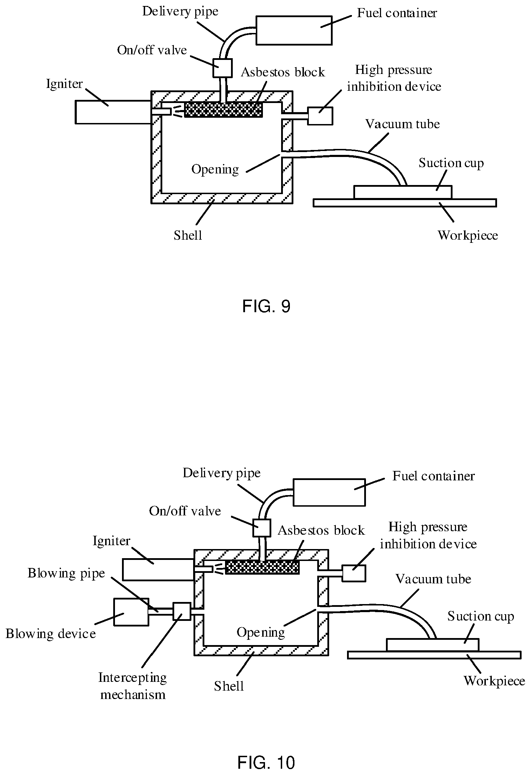

FIG. 9 shows another specific implementation of the present invention. This embodiment is a further improvement on the above-mentioned embodiments, and it is possible to conveniently use the vacuum pressure through the opening of the shell.

The opening of the shell in this embodiment is reduced into a hole. The opening of the shell communicates the vacuum pressure in the cavity through a vacuum tube to vacuum-using equipment, such as a suction cup. The vacuum in the cavity enables the suction cup to suck the workpiece. When the suction cup is detached from the workpiece, external air may flow through the suction cup and vacuum tube into the cavity, so that there is a certain amount of oxygen in the cavity, so that secondary combustion can be carried out.

After primary combustion is completed, an exhaust gas may be generated in the cavity. The opening of the shell in this embodiment is relatively small, and therefore it is difficult to effectively discharge exhaust gas. If the exhaust gas cannot be discharged, the oxygen content in the cavity may be reduced, resulting in insufficient combustion of fuel, and further affecting the flame volume. Therefore, the vacuum generator of this embodiment is further provided with a ventilation mechanism for discharging combustion exhaust gas and feeding air, as shown in FIG. 10. The ventilation mechanism includes a blowing device and an intercepting mechanism. The intercepting mechanism is configured to control communication between the cavity and outside atmosphere, so that the blowing device inputs the air to the cavity or discharges the exhaust gas from the cavity to the outside atmosphere. Before the next combustion, the intercepting mechanism is opened to communicate the cavity with the outside atmosphere. The blowing device is then started, to feed outside air through the air supply pipe to the cavity. In the process of air supply, the exhaust gas from the last combustion is discharged outward through an open hole or an intercepting mechanism. After the exhaust gas is discharged and the air is filled in the cavity, the intercepting mechanism closes the communication between the cavity and the outside atmosphere, and at the same time, the blowing device stops. After the suction cup is placed on the workpiece, the igniter ignites the fuel on the asbestos block to carry out a new round of workpiece suction action.

In addition, to increase the burning flame, the ventilation mechanism may further feed a combustion-supporting gas such as pure oxygen to the cavity. Oxygen can make the combustion more sufficient and the flame bigger.

### Embodiment 5

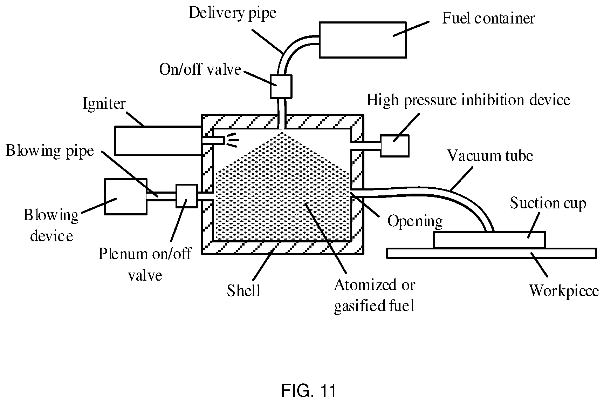

In this embodiment, the combustible object used in the vacuum generator is gaseous or quasi-gaseous, such as methane, or atomized gasoline. As shown in FIG. 11, the fuel replenishment unit includes an on/off valve, a fuel container, and a delivery pipe. When the on/off valve is opened, the combustible gases or oil mist are delivered from the fuel container to the cavity to be mixed with the air in the cavity. After ignition by the igniter, a flame is generated, and a vacuum pressure is formed when the flame is extinguished. The advantages of using the gaseous or quasi-gaseous fuel such as combustible gas or oil mist as the combustible object is that the flame can be formed in the whole cavity, which is helpful to improve the vacuum pressure. Experiments show that compared with the above-mentioned alcohol-containing block and asbestos block soaked with alcohol, using atomized alcohol as fuel can produce a higher vacuum pressure.

## Claims

1. A flame-based vacuum generator, comprising a shell and a combustion assembly, wherein the shell has a cavity, the cavity being a space having at least one opening configured to be closed for generating a vacuum, and the combustion assembly comprises a combustible object and an igniter, the igniter being configured to ignite the combustible object, wherein the combustible object is configured for generating a flame in the cavity for generating the vacuum, and extinguishing the flame in the cavity, **characterized in that**
the vacuum generator further comprises a high pressure inhibition device which communicates the cavity with the atmosphere outside the cavity only when the pressure in the cavity is greater than a pressure outside the cavity, and configured to reduce a high pressure formed in the cavity when the flame is generated.

2. The flame-based vacuum generator according to claim 1, wherein the combustion assembly further comprises a fuel replenishment unit, wherein the fuel replenishment unit is configured to replenish fuel required by the combustible object to the cavity.

3. The flame-based vacuum generator according to claim 2, wherein the fuel replenished to the cavity by the fuel replenishment unit is a combustible gas, a combustible liquid, or an atomized combustible liquid.

4. The flame-based vacuum generator according to any of claims 1 to 3, wherein the vacuum generator further comprises a ventilation mechanism, and the ventilation mechanism is configured to deliver air or a combustion-supporting gas to the cavity.

5. The flame-based vacuum generator according to claim 4, wherein the ventilation mechanism further comprises a blowing device and an intercepting mechanism, the intercepting mechanism is configured to control communication between the cavity and outside atmosphere, so that the blowing device is configured to input the air or the combustion-supporting gas to the cavity.

## Patentansprüche

1. Flammenbasierter Vakuumerzeuger, umfassend eine Hülle und eine Verbrennungsanordnung, wobei die Hülle einen Hohlraum aufweist, wobei der Hohlraum ein Raum mit mindestens einer Öffnung ist, die eingerichtet ist, um zum Erzeugen eines Vakuums geschlossen zu sein, und die Verbrennungsanordnung einen brennbaren Gegenstand und einen Zünder umfasst, wobei der Zünder eingerichtet ist, um den brennbaren Gegenstand zu zünden, wobei der brennbare Gegenstand zum Erzeugen einer Flamme in dem Hohlraum zum Erzeugen des Vakuums und zum Erlöschen der Flamme in dem Hohlraum eingerichtet ist,
**dadurch gekennzeichnet, dass**
der Vakuumerzeuger ferner eine Hochdruckverhinderungsvorrichtung umfasst, die den Hohlraum nur dann mit der Atmosphäre außerhalb des Hohlraums verbindet, wenn der Druck in dem Hohlraum größer ist als ein Druck außerhalb des Hohlraums, und die eingerichtet ist, um einen hohen Druck zu verringern, der in dem Hohlraum entsteht, wenn die Flamme erzeugt wird.

2. Flammenbasierter Vakuumerzeuger nach Anspruch 1, wobei die Verbrennungsanordnung ferner eine Brennstoffnachfülleinheit umfasst, wobei die Brennstoffnachfülleinheit eingerichtet ist, um Brennstoff, der von dem brennbaren Gegenstand benötigt wird, in den Hohlraum nachzufüllen.

3. Flammenbasierter Vakuumerzeuger nach Anspruch 2, wobei der Brennstoff, der von der Brennstoffnachfülleinheit in den Hohlraum nachgefüllt wird, ein brennbares Gas, eine brennbare Flüssigkeit oder eine zerstäubte brennbare Flüssigkeit ist.

4. Flammenbasierter Vakuumerzeuger nach einem der Ansprüche 1 bis 3, wobei der Vakuumerzeuger ferner einen Belüftungsmechanismus umfasst und der Belüftungsmechanismus eingerichtet ist, um Luft oder ein verbrennungsunterstützendes Gas in den Hohlraum zu liefern.

5. Flammenbasierter Vakuumerzeuger nach Anspruch 4, wobei der Belüftungsmechanismus ferner eine Gebläsevorrichtung und einen Unterbrechungsmechanismus umfasst, wobei der Unterbrechungsmechanismus eingerichtet ist, um eine Verbindung zwischen dem Hohlraum und der Außenatmosphäre zu steuern, so dass die Gebläsevorrichtung eingerichtet ist, um die Luft oder das verbrennungsunterstützende Gas in den Hohlraum einzuleiten.

## Revendications

1. Générateur de vide à base de flamme, comprenant une coque et un ensemble de combustion, dans lequel la coque comporte une cavité, la cavité étant un espace présentant au moins une ouverture configurée pour être fermer pour la génération d'un vide, et l'ensemble de combustion comprend un objet combustible et un allumeur, l'allumeur étant configuré pour allumer l'objet combustible, dans lequel l'objet combustible est configuré pour générer une flamme dans la cavité pour la génération du vide, et pour éteindre la flamme dans la cavité,
**caractérisé en ce que**
le générateur de vide comprend en outre un dispositif d'inhibition de haute pression faisant communiquer la cavité avec l'atmosphère à l'extérieur de la cavité uniquement lorsque la pression dans la cavité est supérieure à une pression à l'extérieur de la cavité, et configuré pour réduire une haute pression formée dans la cavité lorsque la flamme est générée.

2. Générateur de vide à base de flamme selon la revendication 1, dans lequel l'ensemble de combustion comprend en outre une unité de chargement de combustible, dans lequel l'unité de chargement de combustible est configurée pour charger du combustible nécessaire à l'objet combustible dans la cavité.

3. Générateur de vide à base de flamme selon la revendication 2, dans lequel le combustible chargé dans la cavité par l'unité de chargement de combustible est un gaz combustible, un liquide combustible ou un liquide combustible atomisé.

4. Générateur de vide à base de flamme selon l'une quelconque des revendications 1 à 3, dans lequel le générateur de vide comprend en outre un mécanisme de ventilation, et le mécanisme de ventilation est configuré pour délivrer de l'air ou un gaz de support de combustion dans la cavité.

5. Générateur de vide à base de flamme selon la revendication 4, dans lequel le mécanisme de ventilation comprend en outre un dispositif de soufflage et un mécanisme d'interception, le mécanisme d'interception est configuré pour commander la communication entre la cavité et l'atmosphère extérieure, de sorte que le dispositif de soufflage est configuré pour introduire l'air ou le gaz de support de combustion dans la cavité.
